# EUROPEAN PATENT SPECIFICATION

(11) **EP 1 547 288 B1**
(45) Date of publication and mention of the grant of the patent: **06.03.2013**
(21) Application number: 03752569.8
(22) Date of filing: 23.09.2003
(51) Int. Cl.: H04W 52/54, H04L 1/00, H04W 52/34

(54) **MESSAGING FOR TRANSMISSION LINK ADAPTATION**
NACHRICHTENÜBERTRAGUNG FÜR DIE ANPASSUNG DER ÜBERTRAGUNGSVERBINDUNG
MESSAGERIE POUR ADAPTATION DE LIAISON DE TRANSMISSION

(30) Priority: 30.09.2002 US 262412
(43) Date of publication of application: 29.06.2005
(73) Proprietor: Intel Corporation, Santa Clara, CA 95052 (US)
(72) Inventor: SANKARAN, Sundar, G., San Jose, CA 95129 (US); FLEISCHER, Stephen, D., Mountain View, CA 94043 (US); PETRUS, Paul, Santa Clara, CA 95050 (US)
(74) Representative: Talbot-Ponsonby, Daniel Frederick
(86) International application number: PCT/US2003/029895
(87) International publication number: WO 2004/032400

(56) References cited:
- EP-A- 1 209 838
- WO-A-00/49760
- GB-A- 2 349 042
- US-B1- 6 452 941

## Description

### FIELD OF THE INVENTION

The invention relates generally to the field of wireless communications. More particularly, the invention relates to messaging to support transmission link adaptation.

### DESCRIPTION OF THE RELATED ART

In communications between radio units over a communications channel, data rates may be modified as the conditions of the channel vary. To modify data rates, varying transmission modes may be used. As the transmission mode is changed, there may be messaging between the radio units in connection with the selection of the transmission mode and the decoding of data transmissions.
In a conventional communications system, each radio in the transmission may determine channel conditions and signal qualities for received signals and may recommend the transmission mode to be used for transmissions to the radio. For example, a remote terminal may recommend the transmission mode for the downlink transmission from a base station, and the base station may recommend the transmission mode for the uplink transmission from the remote terminal. However, such operations require that each radio unit contain the necessary intelligence to perform the process of determining the transmission mode. For this reason, the modification of a particular radio unit will only serve to enhance the performance of the received transmission link. To provide enhancement of the link adaptation of both uplink and downlink transmissions, changes are required for each radio unit operating over the communication change.

US6452941 (Bruhn) discloses a communication system to reduce the overhead capacity consumption associated with the transmission of mode information. The rate of change of mode information is constrained to be less than every frame. For example, the mode indication and mode requests can be constrained to change no more than once every other frame. Under these circumstances, the transmission of mode indicators and mode requests can also be alternated to reduce the transmission capacity used by these indicators and minimize processing delays associated with mode changes.

EP1209838 (Lucent Technologies Inc) discloses a method and system adapted for use with a shared downlink communications channel. It discloses a rate feedback and adaptation scheme or system. In particular, the rate adaptation system provides a rate of rate feedback slower than the rate of rate adaptation. Thus, by allowing the base station to change the data rate more frequently than the individual wireless units reports the rate information, the rate adaptation system can provide improved flexibility and more efficient use of wireless resources while reducing the processing and transmission overhead required to report the rate information.

### BRIEF SUMMARY OF THE INVENTION

A method and apparatus are provided for messaging for link adaptation.

According to one aspect of the invention there is provided a messaging method for transmission link adaptation, the method comprising: in a first frame, receiving data by a first radio unit from a second radio unit regarding available transmission power of the second radio unit, and then transmitting data by the first radio unit to the second radio unit regarding a current transmission mode of the first radio unit; in a second frame, receiving data by the first radio unit from the second radio unit regarding a current transmission mode of the second radio unit, and then transmitting data by the first radio unit to the second radio unit regarding a recommended transmission mode for the second radio unit; and adapting a link, by the first radio unit, between the first and the second radio units via the data regarding the recommended transmission mode transmitted to the second radio unit, wherein the recommended transmission mode is determined by the first radio unit based at least in part on the available transmission power of the second radio unit, wherein the first and second frames are alternating frames of a stream to adapt the link.

According to another aspect of the invention there is provided a radio unit comprising: a processor to determine a transmission mode for the radio unit and to determine a recommended transmission mode for another radio unit; a transmitter to transmit data to the other radio unit regarding a current transmission mode of the radio unit, and to transmit data to the other radio unit regarding a recommended transmission mode for the other radio unit, wherein the data regarding the current transmission mode of the radio unit is transmitted in a first frame while the data regarding the recommended transmission mode for the other radio unit is transmitted in a second frame, wherein the first and second frames are alternating frames of a stream to adapt a link between the radio units; and a receiver to receive data from the other radio unit regarding available transmission power of the other radio unit, and to receive data from the other radio unit regarding a current transmission mode of the other radio unit, wherein the data regarding the available transmission power of the other radio unit is received in the first frame before transmission of the data regarding the current transmission mode of the radio unit, while the data regarding the current transmission mode of the other radio unit is received in the second frame before transmission of the data regarding the recommended transmission mode for the other radio unit, and wherein the processor is configured to adapt the link between the radio units via the data regarding the recommended transmission mode transmitted to the other radio unit, wherein the recommended transmission mode is determined based at least in part on the available transmission power of the other radio unit.

According to another aspect of the invention there is provided a messaging method for transmission link adaptation, the method comprising: in a first frame, transmitting data to a first radio unit by a second radio unit regarding available transmission power of the second radio unit, and then receiving data from the first radio unit by the second radio unit regarding a current transmission mode of the first radio unit; in a second frame, transmitting data to the first radio unit by the second radio unit regarding a current transmission mode of the second radio unit, and then receiving data from the first radio unit by the second radio unit regarding a recommended transmission mode for the second radio unit; and modifying the transmission mode of the second radio unit based at least in part on the data regarding the recommended transmission mode received from the first radio unit to thereby adapt a link between the first and second radio units, wherein the first and second frames are alternating frames of a stream to adapt the link.

According to another aspect of the invention there is provided a radio unit comprising a processor to determine a transmission mode for the radio unit; a transmitter to transmit data to another radio unit regarding available transmission power of the radio unit, and to transmit data to the other radio unit regarding a current transmission mode of the radio unit, wherein the data regarding the available transmission power of the radio unit is transmitted in a first frame while the data regarding the current transmission mode of the radio unit is transmitted in a second frame, wherein the first and second frames are alternating frames of a stream to adapt a link between the radio units; a receiver to receive data from the other radio unit regarding a current transmission mode of the other radio unit, and to receive data from the other radio unit regarding a recommended transmission mode for the radio unit, wherein the data regarding the current transmission mode of the other radio unit is received in the first frame after transmission of the data regarding the available transmission power of the radio unit, while the data regarding the recommended transmission mode for the radio unit is received in the second frame after transmission of the data regarding the current transmission mode of the radio unit; wherein the processor is configured to modify the transmission mode of the radio unit based at least in part on the data regarding the recommended transmission mode received from the other radio unit, to thereby adapt a link between the radio units.

Other features of the present invention will be apparent from the accompanying drawings and from the detailed description that follows.

### BRIEF DESCRIPTION OF THE SEVERAL VIEWS OF THE DRAWINGS

The present invention is illustrated by way of example, and not by way of limitation, in the figures of the accompanying drawings in which like reference numerals refer to similar elements, and in which:
Figure 1 is an illustration of communications between a first device and a second device in an embodiment of the invention;
Figure 2 is a graph illustrating link adaptation;
Figure 3 is a simplified block diagram illustrating a base station on which an embodiment of the invention can be implemented; and
Figure 4 is a simplified block diagram illustrating a remote terminal on which an embodiment of the invention can be implemented.

### DETAILED DESCRIPTION OF THE INVENTION

### Overview

An embodiment of the present invention provides for the messaging for link adaptation. In an uplink control channel, information regarding the current uplink transmission mode and regarding the available uplink transmission power is multiplexed and transmitted, a transmission mode being a combination of a modulation scheme and a coding method. In a downlink control channel from the first radio unit to the second radio unit, information regarding the current downlink transmission mode and regarding a recommended uplink transmission mode is multiplexed and transmitted.
In one embodiment, it is contemplated the invention is implemented in a TDD (time division duplex) high bandwidth wireless data and voice system, such as ArrayComm's i-BURST^{™} system. However, it should be appreciated the invention is not limited to the I-BURST system or any other particular air interface, and in fact it should become apparent from the description herein that the invention may find use with a variety of air interface protocols and communications systems.

### Messaging

The present invention will generally be described in the context of a base station and a remote terminal. The base station transmits downlink data bursts and the remote terminal transmits uplink data bursts. However, the invention is not limited to systems with base stations and remote terminals or to uplink and downlink data transmissions. The remote terminal transmits information regarding the current transmission mode (also referred to as a modulation class or mod class) being used by the remote terminal and the available transmission power of the remote terminal. The available transmission power is the difference between the maximum transmission power and the current transmission power. However, transmission power information may be transmitted in various other forms. The base station transmits information regarding the current transmission mode of the base station and a recommended transmission mode for the remote terminal.
Varying messages communicated between a base station and a remote terminal, including utClass, modClassUp, and modClassDown, can be used to set or change the modulation class used for transmitting uplink or downlink data bursts. Alternatively, a FACCH (fast access control channel) or another form of message can be used to set or adjust the modulation class.

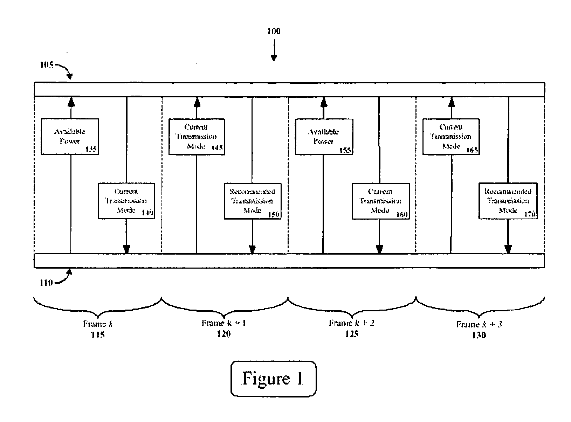

**Figure 1** is a simplified illustration of a series of transmissions between radio units in an embodiment of the invention. As noted further below, the order of the transmissions may vary in different embodiments of the invention. In the illustration, the transmission sequence **100** between a first radio unit **105** and a second radio unit **110** includes an uplink transmission and a downlink transmission in each of a number of transmission frames. The first radio unit may include a base station and the second radio unit may include a remote terminal, but the radio units are not limited to these particular examples. The transmission frames illustrated are an initial frame, frame *k* **115,** and the following or succeeding frames, frame *k* + 1 **120,** frame *k* + 2 **125,** and frame *k* + 3 **130.**
In the uplink transmission **135** of frame *k* 115, information regarding the available power of the second radio **110** is transmitted to the first radio **105.** In the downlink transmission **140** of frame k **115,** information regarding the current transmission mode of the first radio unit **105** is transmitted to the second radio unit **110.** In frame *k* + 1 **120**, the current transmission mode of the second radio unit **110** is transmitted in the uplink **145** and a recommended transmission mode for the second radio unit **110** is transmitted in the downlink **150.** Uplink **155** and downlink **160** of frame *k* + 2 **125** and uplink **165** and downlink **170** of frame *k* + 3 **130** then repeat the pattern of the frame *k* **115** and frame *k* + **1 120.**
In a first embodiment of the invention, the available power of a remote terminal is provided to a base station in the uplink transmission of a first transmission frame. In the downlink transmission of the first transmission frame, the base station transmits the current transmission mode of the base station. The current transmission mode may be the transmission mode used by the base station for the current frame and the next or succeeding frame, but this may vary in other embodiments. In a second embodiment of the invention, the available power of the remote terminal is provided to the base station in the uplink transmission of a first transmission frame, and in the downlink transmission of the first transmission frame, the base station transmits a recommended transmission mode for the remote terminal. The recommended transmission mode is based at least in part on the available power information provided by the remote terminal.
In the first embodiment of the invention, in the uplink transmission of a second frame, the remote terminal transmits the current transmission mode of the remote terminal. The current transmission mode may be the transmission mode used by the base station for the current frame and the succeeding frame, but this may vary in other embodiments. In the downlink transmission of the second frame, the base station transmits the recommended transmission mode for the remote terminal. In the second embodiment of the invention, the uplink transmission includes a current uplink transmission mode and the downlink includes a current downlink transmission mode.
In an embodiment of the invention, the base station selects a transmission mode for the base station. Information regarding the chosen transmission mode is transmitted to the remote terminal as the current transmission mode for the base station. The remote terminal then uses the current transmission mode to decode data transmissions from the base station. The base station also selects a recommended transmission mode for the remote terminal and transmits the recommended transmission mode to the remote terminal. The remote terminal modifies the transmission mode of the remote terminal based at least in part upon the recommended transmission mode and transmits information regarding the current transmission mode to the base station. The base station then uses the current transmission mode of the remote terminal to decode data transmissions from the remote terminal. The remote terminal and base station then continue this process to establish modified transmission modes as conditions change.
In one example, a remote terminal transmits information regarding the available power of the remote terminal in the uplink of a first frame, and the base station transmits the current transmission mode of the base station in the downlink of the first frame. In a second frame, the remote terminal transmits the current transmission mode of the base station in the uplink and the base station transmits a recommended transmission mode in the downlink. This process then repeats. As a result, there is a time period of a downlink transmission and an uplink transmission between the transmission of the available power of the remote terminal and the transmission of the recommended transmission mode, allowing a time period for determination of the recommended class. In addition, there is one frame between the transmission of the recommended transmission mode and the next transmission of the current transmission mode for the remote terminal. Therefore, the remote terminal has one frame to react to the recommendation and modify the transmission mode of the remote terminal based at least in part on the recommended transmission mode.
In an embodiment of the invention involving a first radio unit and a second radio unit, the intelligence needed to perform link adaptation for both radios is only necessary in one of the radio units. As such, the second radio unit may be simplified. If software or hardware upgrades relating to the transmission mode adaptation process are implemented, the implementation may only be required in the intelligent radio that provides link adaptation both for itself and for the other radio unit.

### Link Adaptation

In an example, a wireless data system uses multiple transmission modes, with each transmission mode (also referred to as a modulation class or mod class) including a combination of a modulation scheme and a coding scheme. The transmission mode may also include puncturing and other factors. The transmission mode used by a radio unit may be changed based upon the conditions of the propagation channel and available transmission power.
Link adaptation may be used to maximize the throughput of data transmission as it is restrained by the quality of the transmission channel. Link adaptation for a transmission may be performed by either the transmitting radio unit or the receiving radio unit.
The suite of mod classes available for link adaptation may allow operation over a span of signal qualities. Each mod class is assigned to a band of signal qualities.
Signal qualities may be evaluated using a variety of different quality measures. In one example, the signal quality is evaluated using signal to interference plus noise ratio, thereby allowing rapid evaluation of signal quality. Signal quality may be expressed as the difference between a measured signal quality and a target signal quality.
A list of mod classes may be ordered such that the redundancy in coding decreases through the list. For example, the mod class with the lowest redundancy can be at the highest point in the list. This mod Class can be used for conditions with the highest relative signal qualities. The mod class at the highest point in the list will also generally have the highest modulation scheme, such as 24-QAM (quadrature amplitude modulation). The mod class at the lowest point in the list, for conditions with the lowest signal qualities, then may have the highest redundancy and the lowest modulation scheme, as BPSK (binary phase-shift keying). If SINR is used to evaluate signal quality, the highest mod class would be used for signals with the highest SINR values and the lowest mod class would be used for signals with the lowest SINR values. Intermediate mod classes may be chosen to span the signal qualities between the highest mod class and the lowest mod class. The intermediate mod classes may be chosen to be equally spaced over the span of signal qualities.
In one example, mod classes are mapped to SINR values so as to obtain a certain frame error rate (FER) in each mod class. For example, the mod classes may each result in an FER of approximately one percent.
The modulation classes provide different types of modulation and coding which together vary the number of bits per symbol. The modulation classes can be selected based on terminal capabilities, channel quality, data queue length, or a variety of other factors. The modulation classes can be changed in any number of different ways. The particular number and type of modulation classes can take many different forms as appropriate to accommodate network capacities, channel quality, and cost targets.

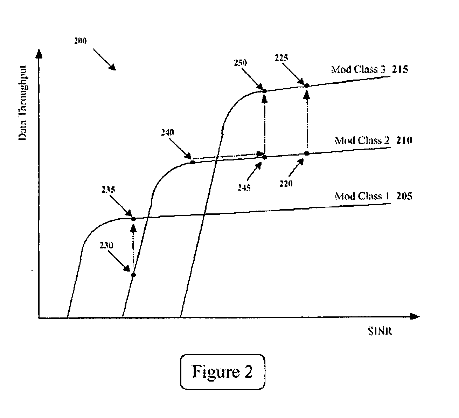

Figure 2 is a graphical illustration of transmission mode operation. In the graph 200, the throughput that is achieved at various SINR values is shown for varying mod classes. Figure 2 is intended for the purpose of illustration, and is not drawn to scale and does not necessarily reflect actual values. In this illustration, the mod classes are graphed according to data throughput on a first axis and SINR on a second axis. For data throughput, each mod class curve rises steeply as SINR is increased and then levels out to a gradual increase. However, the curve for each individual mod class is dependent on the actual modulation and coding schemes that are used and may not be represented by the curves shown in Figure 2. The Mod Class 1 curve 205 is the lowest mod class shown, requiring the lowest SINR and generally providing the lowest data throughput. The Mod Class 3 curve 215 represents the highest of the three mod classes, requiring the highest SINR values and generally providing the highest data throughput. The Mod Class 2 curve 210 represents an intermediate mod class. As seen in Figure 2, a greater throughput may be obtained by changing to a higher or lower mod class, depending on the SINR value. The most desirable operation for data throughput at a given SINR is the highest mod class curve for the SINR value. In addition there are advantages to operating on the gradually increasing upper portion of a mod class curve, as opposed to the rapidly increasing lower portion of a mod class curve. In a first example, a radio device operating at point **220** on the upper portion of the Mod Class 2 curve **210** may be changed to the Mod Class 3 at point **225** on the upper portion of the Mod Class 3 curve **215,** thereby increasing the data throughput. In a second example, a radio device operating at point **230** in the lower portion of the Mod Class 2 curve **210** can increase throughput by lowering the mod class to point **235** on the upper portion of Mod Class 1 curve **205.**
In an example , available transmission power may be used in conjunction with signal quality to select the mod class, and thereby potentially increasing the data throughput of signal transmission and increasing the flexibility of the system. For example, a radio unit may be operating using Mod Class 2 at point **240** on the upper portion of the Mod Class 2 curve **210.** An increase in transmission power generally results in an increase in SINR. The radio unit may estimate the change in signal quality that will result from a change in transmission power, as limited by the available transmission power. If the available transmission power is sufficient to increase the SINR to point **245,** then the data throughput may be further increased by changing from Mod Class 2 to Mod Class 3 at point **250** on the upper portion the Mod Class 3 curve **215.** The examples provided here demonstrate instances in which the data throughput may be increased. However, many other factors may be included in the determination of which mod class is chosen.
In one example, there are nine different predetermined modulation classes as shown in Table 1. The different modulation classes differ in modulation scheme as well as in encoding. The encoding can include error detection and correction, puncturing, block coding, and block shaping. Other types of modulation and encoding can be used depending on the needs of a particular application. The bit per symbol rates are approximate in Table 1 but provide an indication of a range of data rates that can be accomplished using the same number of symbols. Using values of 182 uplink and 460 downlink information symbols per burst, a modulation class 0 burst would carry 91 or 230 bits, respectively. A modulation class 8 burst, on the other hand, carries 728 and 1840 bits, respectively.

**Table 1 - Modulation Classes**

| **Mod Class** | **Bits/Sym** | **Bits/Uplink Burst** | **Bits/Downlink Burst** | **Signal Set** |
|---|---|---|---|---|
| 0 | 0.5 | 91 | 230 | BPSK |
| 1 | 0.67 | 121 | 308 | BPSK |
| 2 | 1.0 | 182 | 460 | QPSK |
| 3 | 1.5 | 273 | 690 | QPSK |
| 4 | 2.0 | 364 | 920 | 8-PSK |
| 5 | 2.5 | 455 | 1150 | 8-PSK |
| 6 | 3.0 | 546 | 1380 | 12-QAM |
| 7 | 3.5 | 637 | 1610 | 16-QAM |
| 8 | 4.0 | 728 | 1840 | 24-QAM |

The modulation classes can also be adjusted to achieve a particular data rate ratio between uplink and downlink, as well as to accommodate the greater capabilities of a base station as compared to a remote terminal. In an example, the ratio of downlink symbols per uplink symbol is approximately 2.5:1. This is believed to be a practical data rate ratio for many Internet applications. If the base station and the remote terminal use the same modulation class, then the data rate ratio will also be about 2.5:1. However, by using different modulation classes, the data rate ratio can be varied between about 0.32:1 (remote terminal at mod class 8, base station at mod class 0) to about 20:1 (remote terminal at mod class 0, base station at mod class 8). In some applications, the base station may frequently transmit all user data using a modulation class that is one step higher than the remote terminal. This provides a data rate ratio between 2.9:1 to 3.8:1. As can be seen, the modulation classes provide a great amount of flexibility in setting the operating parameters of the system.
Another factor that may be considered is that the lower modulation classes generally require less energy to transmit and cause less interference with other users at a base station. Accordingly, the system can be configured to prefer lower modulation classes. On the other hand, the higher modulation classes transmit at higher data rates so that data buffers will be emptied sooner. For many types of data transfer, the higher data rate will mean shorter sessions so that more users can be accommodated. If a user is sending and receiving E-mail, for example, a higher data rate will transfer the E-mail faster, allowing the data transfer to be closed more quickly and making the system resources available to another user. The selection of mod classes may depend not only on the amount of data to be transferred but the relative amount in each direction. If the data to be transferred in one direction is much less than the data to be transferred in the other direction, then the direction with the lesser amount of data can be operated at a much lower modulation class. Since the data transfer will remain open until the larger data buffer is empty, this will not delay closing the data transfer.
The modulation classes are mapped to signal qualities, such as signal to noise ratio. Table 2 illustrates exemplary mod classes established for an uplink transmission, with nominal target SINR values for each mod class. Table 2 illustrates exemplary mod classes established for a downlink transmission, with nominal target SINR values for each mod class. As shown in Tables 2 and 3, the mod classes used and the target signal qualities may vary between the uplink and downlink transmissions.

**Table 2 Nominal Uplink Target SINR's**

| **Mod Class** | **SINR Target (dB)** |
|---|---|
| 0 | 2.2 |
| 1 | 3.8 |
| 2 | 5.5 |
| 3 | 8.4 |
| 4 | 10.6 |
| 5 | 12.9 |
| 6 | 14.9 |
| 7 | 16.2 |

**Table 3 Nominal Downlink Target SINR's**

| **Mod Class** | **SINR Target (dB)** |
|---|---|
| 0 | 2.5 |
| 1 | 4.3 |
| 2 | 5.8 |
| 3 | 8.7 |
| 4 | 10.9 |
| 5 | 13.1 |
| 6 | 15.2 |
| 7 | 16.5 |
| 8 | 18.4 |

### Base Station Structure

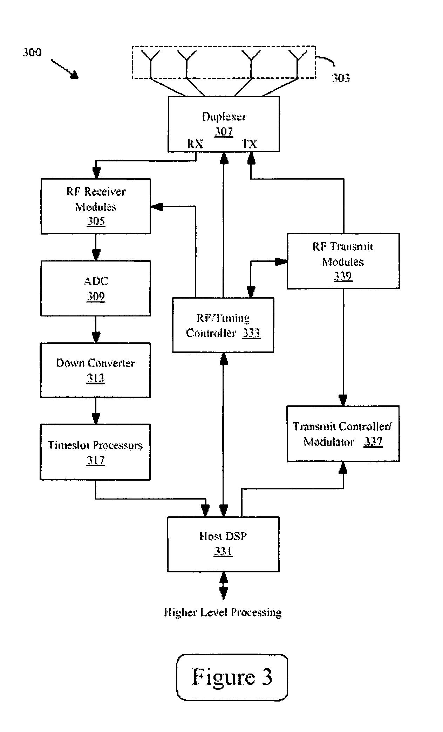

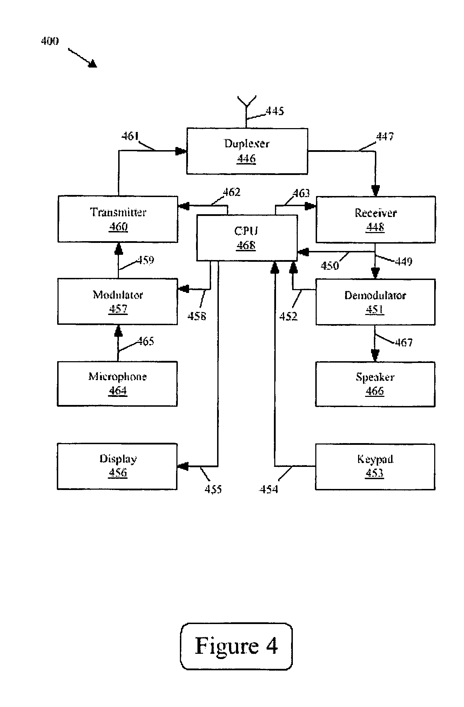

The present invention relates to wireless communication systems and may be a fixed-access or mobile-access wireless network using spatial division multiple access (SDMA) technology in combination with multiple access systems, such as time division multiple access (TDMA), frequency division multiple access (FDMA) and code division multiple access (CDMA). Multiple access can be combined with frequency division duplexing (FDD) or time division duplexing (TDD). **Figure 3** shows an example of a base station **300** of a wireless communications system or network suitable for implementing the present invention. The system or network includes a number of subscriber stations, also referred to as remote terminals or user terminals, such as that shown in Figure 4. The base station **300** may be connected to a wide area network (WAN) through its host DSP **331** for providing any required data services and connections external to the immediate wireless system. To support spatial diversity, a plurality of antennas **303** is used, for example four antennas, although other numbers of antennas may be selected.
A set of spatial multiplexing weights for each subscriber station are applied to the respective modulated signals to produce spatially multiplexed signals to be transmitted by the bank of four antennas. The host DSP **331** produces and maintains spatial signatures for each subscriber station for each conventional channel and calculates spatial multiplexing and demultiplexing weights using received signal measurements. In this manner, the signals from the current active subscriber stations, some of which may be active on the same conventional channel, are separated and interference and noise suppressed. When communicating from the base station **300** to the subscriber stations, an optimized multi-lobe antenna radiation pattern tailored to the current active subscriber station connections and interference situation is created. Suitable smart antenna technologies for achieving such a spatially directed beam are described, for example, in U.S. Patents Nos. 5,828,658, issued Oct. 27, 1998 to Ottersten et al. and 5,642,353, issued June 24, 1997 to Roy, III et al. The channels used may be partitioned in any manner. In one embodiment the channels used may be partitioned as defined in the GSM (Global System for Mobile Communications) air interface, or any other time division air interface protocol, such as Digital Cellular, PCS (Personal Communication System), PHS (Personal Handyphone System) or WLL (Wireless Local Loop). Alternatively, continuous analog or CDMA channels can be used.
The outputs of the antennas are connected to a duplexer switch **307**, which in a TDD embodiment, may be a time switch. Two possible implementations of the duplexer switch are as a frequency duplexer in a frequency division duplex (FDD) system, and as a time switch in a time division duplex (TDD) system. When receiving, the antenna outputs are connected via the duplexer switch to a receiver **305,** and are converted down in analog by RF receiver ("RX") modules **305** from the carrier frequency to an intermediate frequency ("IF"). This signal then is digitized (sampled) by analog to digital converters ("ADCs") **309.** Final down-converting to baseband is carried out digitally. Digital filters can be used to implement the down-converting and the digital filtering, the latter using finite impulse response (FIR) filtering techniques. This is shown as block **313.** The invention can be adapted to suit a wide variety of RF and IF carrier frequencies and bands.
There are, in the present example, eight down-converted outputs from each antenna's digital filter **313,** one per receive timeslot. The particular number of timeslots can be varied to suit network needs. While GSM uses eight uplink and eight downlink timeslots for each TDMA frame, desirable results can also be achieved with any number of TDMA timeslots for the uplink and downlink in each frame. For each of the eight receive timeslots, the four down-converted outputs from the four antennas are fed to a digital signal processor (DSP) **317** (hereinafter "timeslot processor") for further processing, including calibration, according to one aspect of this invention. Eight Motorola DSP56300 Family DSPs can be used as timeslot processors, one per receive timeslot. The timeslot processors **317** monitor the received signal power and estimate the frequency offset and time alignment. They also determine smart antenna weights for each antenna element. These are used in the SDMA scheme to determine a signal from a particular remote user and to demodulate the determined signal.
The output of the timeslot processors 317 is demodulated burst data for each of the eight receive timeslots. This data is sent to the host DSP processor 331 whose main function is to control all elements of the system and interface with the higher level processing, which is the processing which deals with what signals are required for communications in all the different control and service communication channels defined in the system's communication protocol. The host DSP 331 can be a Motorola DSP56300 Family DSP. In addition, timeslot processors send the determined receive weights for each remote terminal to the host DSP 331. The host DSP 331 maintains state and timing information, receives uplink burst data from the timeslot processors 317, and programs the timeslot processors 317. In addition it decrypts, descrambles, checks error correcting code, and de-assembles bursts of the uplink signals, then formats the uplink signals to be sent for higher level processing in other parts of the base station 300. Furthermore DSP 331 may include a memory element to store data, instructions, or hopping functions or sequences. Alternatively, the base station 300 may have a separate memory element or have access to an auxiliary memory element. With respect to the other parts of the base station 300 it formats service data and traffic data for further higher processing in the base station 300, receives downlink messages and traffic data from the other parts of the base station **300,** processes the downlink bursts and formats and sends the downlink bursts to a transmit controller/modulator, shown as **337.** The host DSP also manages programming of other components of the base station **300** including the transmit controller/modulator **337** and the RF timing controller shown as **333.**
The RF controller **333** reads and transmits power monitoring and control values, controls the duplexer **307** and receives timing parameters and other settings for each burst from the host DSP **331.**
The transmit controller/modulator **337,** receives transmit data from the host DSP **331.** The transmit controller uses this data to produce analog IF outputs which are sent to the RF transmitter (TX) modules **339**. Specifically, the received data bits are converted into a complex modulated signal, up-converted to an IF frequency, sampled, multiplied by transmit weights obtained from host DSP **331,** and converted via digital to analog converters ("DACs") which are part of transmit controller/modulator **337** to analog transmit waveforms. The analog waveforms are sent to the transmit modules **339.** The transmit modules **339** up-convert the signals to the transmission frequency and amplify the signals. The amplified transmission signal outputs are sent to antennas **303** via the duplexer/time switch **307.**

### Remote Terminal Structure

**Figure 4** depicts an example component arrangement in a remote terminal **400** that provides data or voice communication. The remote terminal's **400** antenna **445** is connected to a duplexer **446** to permit the antenna **445** to be used for both transmission and reception. The antenna can be omni-directional or directional. For optimal performance, the antenna can be made up of multiple elements and employ spatial processing as discussed above for the base station **500.** In an alternate embodiment, separate receive and transmit antennas are used eliminating the need for the duplexer **446.** In another alternate embodiment, where time division duplexing is used, a transmit/receive (TR) switch can be used instead of a duplexer as is well known in the art. The duplexer output **447** serves as input to a receiver **448.** The receiver **448** produces a down-converted signal **449,** which is the input to a demodulator **451.** A demodulated received sound or voice signal **467** is input to a speaker **466.**
The remote terminal **400** has a corresponding transmit chain in which data or voice to be transmitted is modulated in a modulator **457.** The modulated signal to be transmitted **459,** output by the modulator **457,** is up-converted and amplified by a transmitter **460,** producing a transmitter output signal **461.** The transmitter output **461** is then input to the duplexer **446** for transmission by the antenna **445.**
The demodulated received data **452** is supplied to a remote terminal central processing unit **468** (CPU) as is received data before demodulation **450.** The remote terminal CPU **468** can be implemented with a standard DSP (digital signal processor) device such as a Motorola series 56300 Family DSP. This DSP can also perform the functions of the demodulator **451** and the modulator **457.** The remote terminal CPU **468** controls the receiver through line **463,** the transmitter through line **462,** the demodulator through line **452** and the modulator through line **458.** It also communicates with a keypad **453** through line **454** and a display **456** through line **455.** A microphone **464** and speaker **466** are connected through the modulator **457** and the demodulator **451** through lines **465** and **467,** respectively for a voice communications remote terminal. In another embodiment, the microphone and speaker are also in direct communication with the CPU to provide voice or data communications. Furthermore remote terminal CPU **468** may also include a memory element to store data, instructions, and hopping functions or sequences. Alternatively, the remote terminal **400** may have a separate memory element or have access to an auxiliary memory element.
In one embodiment, the speaker **470,** and the microphone **464** are replaced or augmented by digital interfaces well-known in the art that allow data to be transmitted to and from an external data processing device (for example, a computer). In one embodiment, the remote terminal's CPU **468** is coupled to a standard digital interface such as a PCMCIA interface to an external computer and the display, keyboard, microphone and speaker are a part of the external computer. The remote terminal's CPU **468** communicates with these components through the digital interface and the external computer's controller. For data only communications, the microphone and speaker can be deleted. For voice only communications, the keyboard and display can be deleted.

### General Matters

In the description above, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form.
The present invention is described in the context of TDD (time division duplexing), but the invention is not limited to this context. The invention is also application to wireless systems in which a pilot signal typically is shared among multiple users at the same time, as is commonly required in standards for CDMA (code division multiple access) systems. Current examples of such wireless systems include WCDMA (wideband CDMA), cdma2000, IS-95, and HDR (high data rate) communications. The present system may also be applied to TDMA (time division multiple access) systems such as GSM (global system for mobile communications).
The present invention includes various steps. The steps of the present invention may be performed by hardware components or may be embodied in machine-executable instructions, which may be used to cause a general-purpose or special-purpose processor or logic circuits programmed with the instructions to perform the steps. Alternatively, the steps may be performed by a combination of hardware and software. The steps have been described as being performed by either the base station or the remote terminal. However, many of the steps described as being performed by the base station may be performed by the remote terminal and vice versa.
Furthermore, the invention is equally applicable to systems in which terminals communicate with each other without either one being designated as a base station, a remote terminal, a user terminal, or a subscriber station. Thus, the present invention is equally applicable and useful in a peer-to-peer wireless network of communications devices using spatial processing. These devices may be cellular phones, PDA's, laptop computers, or any other wireless devices. Generally, since both the base stations and the terminals use radio waves, these communications devices of wireless communications networks may be generally referred to as radios.
In portions of the description above, only the base station is described as performing spatial processing using an adaptive antenna array. However, the remote terminals can also contain antenna arrays, and can also perform spatial processing both on receiving and transmitting (uplink and downlink) within the scope of the present invention. Any step or process attributed to the uplink can be instead performed on the downlink and vice versa. Furthermore, in portions of the description above, certain functions performed by a base station could be coordinated across the network, or assigned to other components of the system. The invention does not require the use of adaptive antennas, and may be implemented in any system in which two radios are in communication with each other.
The present invention may be provided as a computer program product, which may include a machine-readable medium having stored thereon instructions, which may be used to program a computer (or other electronic devices) to perform a process according to the present invention. The machine-readable medium may include, but is not limited to, floppy diskettes, optical disks, CD-ROMs, and magneto-optical disks, ROMs, RAMs, EPROMs, EEPROMs, magnet or optical cards, flash memory, or other type of media / machine-readable medium suitable for storing electronic instructions. Moreover, the present invention may also be downloaded as a computer program product, wherein the program may be transferred from a remote computer to a requesting computer by way of data signals embodied in a carrier wave or other propagation medium via a communication link (e.g., a modem or network connection).
Many of the methods are described in their most basic form, but steps can be added to or deleted from any of the methods and information can be added or subtracted from any of the described messages without departing from the basic scope of the present invention. It will be apparent to those skilled in the art that many further modifications and adaptations can be made. The particular embodiments are not provided to limit the invention but to illustrate it. The scope of the present invention is not to be determined by the specific examples provided above but only by the claims below.
It should also be appreciated that reference throughout this specification to "one embodiment" or "an embodiment" means that a particular feature may be included in the practice of the invention. Similarly, it should be appreciated that in the foregoing description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

## Claims

1. A messaging method (100) for transmission link adaptation, the method comprising:
in a first frame (115, 125), receiving (135, 155) data by a first radio unit (105) from a second radio unit (110) regarding available transmission power of the second radio unit (110), and then transmitting (140, 160) data by the first radio unit (105) to the second radio unit (110) regarding a current transmission mode of the first radio unit (105);
in a second frame (120, 130), receiving (145, 165) data by the first radio unit (105) from the second radio unit (110) regarding a current transmission mode of the second radio unit (110), and then transmitting (150, 170) data by the first radio unit (105) to the second radio unit (110) regarding a recommended transmission mode for the second radio unit (110); and
adapting a link, by the first radio unit (105), between the first and the second radio units (105, 110) via the data regarding the recommended transmission mode transmitted to the second radio unit (110), wherein the recommended transmission mode is determined by the first radio unit (105) based at least in part on the available transmission power of the second radio unit (100),
wherein the first and second frames (115, 120; 125, 130) are alternating frames of a stream to adapt the link.

2. The method of claim 1, wherein the data regarding the available transmission power of the second radio unit (110) is received in an uplink slot of the first frame (115, 125) and the data regarding the current transmission mode of the first radio unit (105) is transmitted in a downlink slot of the first frame (115, 125).

3. The method of claim 2, wherein the data regarding the current transmission mode of the second radio unit (110) is received in an uplink slot of the second frame (120, 130) and the data regarding the recommended transmission mode for the second radio unit (110) is transmitted in a downlink slot of the second frame (120,130).

4. The method of claim 1, wherein the data regarding the available transmission power of the second radio unit (110) is received in a downlink slot of the first frame (115, 125) and the data regarding the current transmission mode of the first radio unit (105) is transmitted in an uplink slot of the first frame (115,125).

5. The method of claim 4, wherein the data regarding the current transmission mode of the second radio unit (110) is received in a downlink slot of the second frame (120, 130) and the data regarding the recommended transmission mode for the second radio unit (110) is transmitted in an uplink slot of the second frame (120,130).

6. The method of claim 1, wherein each transmission mode comprises a coding method and a modulation method.

7. The method of claim 1, wherein the data is transmitted and received in a fast associated control channel (FACCH).

8. The method of claim 1, wherein the first radio unit (105) is a base station and wherein the second radio unit (110) is a remote terminal.

9. A radio unit (105, 300) comprising:
a processor (331) to determine a transmission mode for the radio unit (105, 300) and to determine a recommended transmission mode for another radio unit (110);
a transmitter (339) to transmit data to the other radio unit (110) regarding a current transmission mode of the radio unit (105, 300), and to transmit data to the other radio unit (110) regarding a recommended transmission mode for the other radio unit (110), wherein the data regarding the current transmission mode of the radio unit (105, 300) is transmitted in a first frame (115, 125) while the data regarding the recommended transmission mode for the other radio unit (110) is transmitted in a second frame (120, 130), wherein the first and second frames (115, 120; 125, 130) are alternating frames of a stream to adapt a link between the radio units (105, 110); and
a receiver (305) to receive data from the other radio unit (110) regarding available transmission power of the other radio unit (110), and to receive data from the other radio unit (110) regarding a current transmission mode of the other radio unit (110), wherein the data regarding the available transmission power of the other radio unit (110) is received in the first frame (115, 125) before transmission of the data regarding the current transmission mode of the radio unit, while the data regarding the current transmission mode of the other radio unit (110) is received in the second frame (125, 130) before transmission of the data regarding the recommended transmission mode for the other radio unit, and
wherein the processor (331) is configured to adapt the link between the radio units (105, 110) via the data regarding the recommended transmission mode transmitted to the other radio unit (110), wherein the recommended transmission mode is determined based at least in part on the available transmission power of the other radio unit (100).

10. The radio unit (105, 300) of claim 9, wherein the radio unit (105, 300) comprises a base station and the other radio unit (110) comprises a remote terminal.

11. The radio unit (105, 300) of claim 9, wherein each transmission mode comprises a coding method and a modulation method.

12. A messaging method (100) for transmission link adaptation, the method comprising:
in a first frame (115, 125), transmitting (135, 155) data to a first radio unit (105) by a second radio unit (110) regarding available transmission power (135) of the second radio unit (110), and then receiving (140, 160) data from the first radio unit (105) by the second radio unit (110) regarding a current transmission mode of the first radio unit (105);
in a second frame, transmitting (145, 165) data to the first radio unit (105) by the second radio unit (110) regarding a current transmission mode of the second radio unit (110), and then receiving (150, 170) data from the first radio unit (105) by the second radio unit (110) regarding a recommended transmission mode for the second radio unit (110); and
modifying the transmission mode of the second radio unit (110) based at least in part on the data regarding the recommended transmission mode received from the first radio unit (105) to thereby adapt a link between the first and second radio units (105, 110), wherein the first and second frames (115, 120; 125, 130) are alternating frames of a stream to adapt the link.

13. The method of claim 12, wherein the data regarding the available transmission power of the second radio unit (110) is transmitted in an uplink slot of the first frame (115, 125) and the data regarding the current transmission mode of the first radio unit (105) is received in a downlink slot of the first frame (115, 125).

14. The method of claim 13, wherein the data regarding the current transmission mode of the second radio unit (110) is transmitted in an uplink slot of the second frame (120, 130) and the data regarding the recommended transmission mode for the second radio unit (110) is received in a downlink slot of the second frame (120, 130).

15. The method of claim 12, wherein the data regarding the available transmission power of the second radio unit (110) is transmitted in an uplink slot of the first frame (115, 125) and the data regarding the current transmission mode of the first radio unit (105) is received in an uplink slot of the first frame (115, 125).

16. The method of claim 15, wherein the data regarding the current transmission mode of the second radio unit (110) is transmitted in a downlink slot of the second frame (120, 130) and the data regarding the recommended transmission mode for the second radio unit (110) is received in an uplink slot of the second frame (120, 130).

17. The method of claim 12, wherein each transmission mode comprises a coding method and a modulation method.

18. The method of claim 12, wherein the data is transmitted and received in a fast associated control channel (FACCH).

19. The method of claim 12, wherein the first radio unit (105) is a base station and wherein the second radio unit (110) is a remote terminal.

20. A radio unit (110, 300) comprising:
a processor (331) to determine a transmission mode for the radio unit (110);
a transmitter (339) to transmit data to another radio unit (105) regarding available transmission power of the radio unit (110), and to transmit data to the other radio unit (105) regarding a current transmission mode of the radio unit (110), wherein the data regarding the available transmission power of the radio unit (110) is transmitted in a first frame (115, 125) while the data regarding the current transmission mode of the radio unit (110) is transmitted in a second frame (120, 130), wherein the first and second frames (115, 120; 125, 130) are alternating frames of a stream to adapt a link between the radio units (105, 110);
a receiver (305) to receive data from the other radio unit (105) regarding a current transmission mode of the other radio unit (105), and to receive data from the other radio unit (105) regarding a recommended transmission mode for the radio unit (110), wherein the data regarding the current transmission mode of the other radio unit (105) is received in the first frame (115, 125) after transmission of the data regarding the available transmission power of the radio unit, while the data regarding the recommended transmission mode for the radio unit (110) is received in the second frame (120, 130) after transmission of the data regarding the current transmission mode of the radio unit;
wherein the processor (331) is configured to modify the transmission mode of the radio unit (110, 300) based at least in part on the data regarding the recommended transmission mode received from the other radio unit (105), to thereby adapt a link between the radio units (105, 110).

21. The radio unit (110, 300) of claim 20, wherein the radio unit (110, 300) comprises a remote terminal and the other radio unit comprises a base station.

22. The radio unit (110, 300) of claim 20, wherein each transmission mode comprises a coding method and a modulation method.

23. A carrier medium carrying computer readable code for controlling a computer to carry out the method of any one of claims 1 to 8 or any one of claims 12 to 19.

## Patentansprüche

1. Nachrichtenübertragungsverfahren (100) für die Anpassung der Übertragungsverbindung, wobei das Verfahren Folgendes umfasst:
in einem ersten Rahmen (115, 125) durch eine erste Funkeinheit (105) von einer zweiten Funkeinheit (110) Daten empfangen (135, 155), die verfügbare Übertragungsleistung der zweiten Funkeinheit (110) betreffen, und dann durch die erste Funkeinheit (105) an die zweite Funkeinheit (110) Daten übertragen (140, 160), die einen gegenwärtigen Übertragungsmodus der ersten Funkeinheit (105) betreffen;
in einem zweiten Rahmen (120, 130) durch die erste Funkeinheit (105) von der zweiten Funkeinheit (110) Daten empfangen (145, 165), die einen gegenwärtigen Übertragungsmodus der zweiten Funkeinheit (110) betreffen, und dann durch die erste Funkeinheit (105) an die zweite Funkeinheit (110) Daten übertragen (150, 170), die einen empfohlenen Übertragungsmodus für die zweite Funkeinheit (110) betreffen; und
durch die erste Funkeinheit (105) eine Verbindung zwischen der ersten und zweiten Funkeinheit (105, 110) über die an die zweite Funkeinheit (110) übertragenen Daten anpassen, die den empfohlenen Übertragungsmodus betreffen, worin der empfohlene Übertragungsmodus durch die erste Funkeinheit (105) bestimmt wird, mindestens zum Teil auf der verfügbaren Übertragungsleistung der zweiten Funkeinheit (100) basierend,
worin der erste und zweite Rahmen (115, 120; 125, 130) alternierende Rahmen eines Stroms sind, um die Verbindung anzupassen.

2. Verfahren nach Anspruch 1, worin die Daten, die die verfügbare Übertragungsleistung der zweiten Funkeinheit (110) betreffen, in einem Uplink-Schlitz des ersten Rahmens (115, 125) empfangen werden und die Daten, die den gegenwärtigen Übertragungsmodus der ersten Funkeinheit (105) betreffen, in einem Downlink-Schlitz des ersten Rahmens (115, 125) übertragen werden.

3. Verfahren nach Anspruch 2, worin die Daten, die den gegenwärtigen Übertragungsmodus der zweiten Funkeinheit (110) betreffen, in einem Uplink-Schlitz des zweiten Rahmens (120, 130) empfangen werden und die Daten, die den empfohlenen Übertragungsmodus für die zweite Funkeinheit (110) betreffen, in einem Downlink-Schlitz des zweiten Rahmens (120, 130) übertragen werden.

4. Verfahren nach Anspruch 1, worin die Daten, die die verfügbare Übertragungsleistung der zweiten Funkeinheit (110) betreffen, in einem Downlink-Schlitz des ersten Rahmens (115, 125) empfangen werden und die Daten, die den gegenwärtigen Übertragungsmodus der ersten Funkeinheit (105) betreffen, in einem Uplink-Schlitz des ersten Rahmens (115, 125) übertragen werden.

5. Verfahren nach Anspruch 4, worin die Daten, die den gegenwärtigen Übertragungsmodus der zweiten Funkeinheit (110) betreffen, in einem Downlink-Schlitz des zweiten Rahmens (120, 130) empfangen werden und die Daten, die den empfohlenen Übertragungsmodus für die zweite Funkeinheit (110) betreffen, in einem Uplink-Schlitz des zweiten Rahmens (120, 130) übertragen werden.

6. Verfahren nach Anspruch 1, worin jeder Übertragungsmodus ein Codierverfahren und ein Modulationsverfahren umfasst.

7. Verfahren nach Anspruch 1, worin die Daten in einem schnellen assoziierten Steuerkanal (FACCH) übertragen und empfangen werden.

8. Verfahren nach Anspruch 1, worin die erste Funkeinheit (105) eine Basisstation ist und worin die zweite Funkeinheit (110) ein entferntes Endgerät ist.

9. Funkeinheit (105, 300), Folgendes umfassend:
einen Prozessor (331) zum Bestimmen eines Übertragungsmodus für die Funkeinheit (105, 300) und zum Bestimmen eines empfohlenen Übertragungsmodus für eine andere Funkeinheit (110);
einen Sender (339), um an die andere Funkeinheit (110) Daten zu übertragen, die einen gegenwärtigen Übertragungsmodus der Funkeinheit (105, 300) betreffen, und um an die andere Funkeinheit (110) Daten zu übertragen, die einen empfohlenen Übertragungsmodus für die andere Funkeinheit (110) betreffen, worin die Daten, die den gegenwärtigen Übertragungsmodus der Funkeinheit (105, 300) betreffen, in einem ersten Rahmen (115, 125) übertragen werden, während die Daten, die den empfohlenen Übertragungsmodus für die andere Funkeinheit (110) betreffen, in einem zweiten Rahmen (120, 130) übertragen werden, worin der erste und zweite Rahmen (115, 120; 125, 130) alternierende Rahmen eines Stroms sind, um eine Verbindung zwischen den Funkeinheiten (105, 110) anzupassen; und
einen Empfänger (305), um von der anderen Funkeinheit (110) Daten zu empfangen, die verfiigbare Übertragungsleistung der anderen Funkeinheit (110) betreffen, und um von der anderen Funkeinheit (110) Daten zu empfangen, die einen gegenwärtigen Übertragungsmodus der anderen Funkeinheit (110) betreffen, worin die Daten, die die verfügbare Übertragungsleistung der anderen Funkeinheit (110) betreffen, im ersten Rahmen (115, 125) empfangen werden, bevor die Daten, die den gegenwärtigen Übertragungsmodus der Funkeinheit betreffen, übertragen werden, während die Daten, die den gegenwärtigen Übertragungsmodus der anderen Funkeinheit (110) betreffen, im zweiten Rahmen (125, 130) empfangen werden, bevor die Daten, die den empfohlenen Übertragungsmodus für die andere Funkeinheit betreffen, übertragen werden, und
worin der Prozessor (331) dazu konfiguriert ist, die Verbindung zwischen den Funkeinheiten (105, 110) über die den empfohlenen Übertragungsmodus betreffenden Daten anzupassen, die an die andere Funkeinheit (110) übertragen werden, worin der empfohlene Übertragungsmodus mindestens zum Teil auf der Basis der verfügbaren Übertragungsleistung der anderen Funkeinheit (100) bestimmt wird.

10. Funkeinheit (105, 300) nach Anspruch 9, worin die Funkeinheit (105, 300) eine Basisstation umfasst und die andere Funkeinheit (110) ein entferntes Endgerät umfasst.

11. Funkeinheit (105, 300) nach Anspruch 9, worin jeder Übertragungsmodus ein Codierverfahren und ein Modulationsverfahren umfasst.

12. Nachrichtenübertragungsverfahren (100) für die Anpassung der Übertragungsverbindung, wobei das Verfahren Folgendes umfasst:
in einem ersten Rahmen (115, 125) durch eine zweite Funkeinheit (110) an eine erste Funkeinheit (105) Daten übertragen (135, 155), die verfügbare Übertragungsleistung (135) der zweiten Funkeinheit (110) betreffen, und dann durch die zweite Funkeinheit (110) von der ersten Funkeinheit (105) Daten empfangen (140, 160), die einen gegenwärtigen Übertragungsmodus der ersten Funkeinheit (105) betreffen;
in einem zweiten Rahmen durch die zweite Funkeinheit (110) an die erste Funkeinheit (105) Daten übertragen (145, 165), die einen gegenwärtigen Übertragungsmodus der zweiten Funkeinheit (110) betreffen, und dann durch die zweite Funkeinheit (110) von der ersten Funkeinheit (105) Daten empfangen (150, 170), die einen empfohlenen Übertragungsmodus für die zweite Funkeinheit (110) betreffen; und
Modifizieren des Übertragungsmodus der zweiten Funkeinheit (110), mindestens zum Teil auf den den empfohlenen Übertragungsmodus betreffenden Daten basierend, die von der ersten Funkeinheit (105) empfangen werden, um dadurch eine Verbindung zwischen der ersten und zweiten Funkeinheit (105, 110) anzupassen, worin der erste und zweite Rahmen (115, 120; 125, 130) alternierende Rahmen eines Stroms sind, um die Verbindung anzupassen.

13. Verfahren nach Anspruch 12, worin die Daten, die die verfügbare Übertragungsleistung der zweiten Funkeinheit (110) betreffen, in einem Uplink-Schlitz des ersten Rahmens (115, 125) übertragen werden, und die Daten, die den gegenwärtigen Übertragungsmodus der ersten Funkeinheit (105) betreffen, in einem Downlink-Schlitz des ersten Rahmens (115, 125) empfangen werden.

14. Verfahren nach Anspruch 13, worin die Daten, die den gegenwärtigen Übertragungsmodus der zweiten Funkeinheit (110) betreffen, in einem Uplink-Schlitz des zweiten Rahmens (120, 130) übertragen werden, und die Daten, die den empfohlenen Übertragungsmodus für die zweite Funkeinheit (110) betreffen, in einem Downlink-Schlitz des zweiten Rahmens (120, 130) empfangen werden.

15. Verfahren nach Anspruch 12, worin die Daten, die die verfügbare Übertragungsleistung der zweiten Funkeinheit (110) betreffen, in einem Uplink-Schlitz des ersten Rahmens (115, 125) übertragen werden, und die Daten, die den gegenwärtigen Übertragungsmodus der ersten Funkeinheit (105) betreffen, in einem Uplink-Schlitz des ersten Rahmens (115, 125) empfangen werden.

16. Verfahren nach Anspruch 15, worin die Daten, die den gegenwärtigen Übertragungsmodus der zweiten Funkeinheit (110) betreffen, in einem Downlink-Schlitz des zweiten Rahmens (120, 130) übertragen werden, und die Daten, die den empfohlenen Übertragungsmodus für die zweite Funkeinheit (110) betreffen, in einem Uplink-Schlitz des zweiten Rahmens (120, 130) empfangen werden.

17. Verfahren nach Anspruch 12, worin jeder Übertragungsmodus ein Codierverfahren und ein Modulationsverfahren umfasst.

18. Verfahren nach Anspruch 12, worin die Daten in einem schnellen assoziierten Steuerkanal (FACCH) übertragen und empfangen werden.

19. Verfahren nach Anspruch 12, worin die erste Funkeinheit (105) eine Basisstation ist und worin die zweite Funkeinheit (110) ein entferntes Endgerät ist.

20. Funkeinheit (110, 300), Folgendes umfassend:
einen Prozessor (331) zum Bestimmen eines Übertragungsmodus für die Funkeinheit (110);
einen Sender (339), um an eine andere Funkeinheit (105) Daten zu übertragen, die verfügbare Übertragungsleistung der Funkeinheit (110) betreffen, und um an die andere Funkeinheit (105) Daten zu übertragen, die einen gegenwärtigen Übertragungsmodus der Funkeinheit (110) betreffen, worin die Daten, die die verfügbare Übertragungsleistung der Funkeinheit (110) betreffen, in einem ersten Rahmen (115, 125) übertragen werden, während die Daten, die den gegenwärtigen Übertragungsmodus der Funkeinheit (110) betreffen, in einem zweiten Rahmen (120, 130) übertragen werden, worin der erste und zweite Rahmen (115, 120; 125, 130) alternierende Rahmen eines Stroms sind, um eine Verbindung zwischen den Funkeinheiten (105, 110) anzupassen;
einen Empfänger (305), um von der anderen Funkeinheit (105) Daten zu empfangen, die einen gegenwärtigen Übertragungsmodus der anderen Funkeinheit (105) betreffen, und um von der anderen Funkeinheit (105) Daten zu empfangen, die einen empfohlenen Übertragungsmodus für die Funkeinheit (110) betreffen, worin die Daten, die den gegenwärtigen Übertragungsmodus der anderen Funkeinheit (105) betreffen, im ersten Rahmen (115, 125) empfangen werden, nachdem die Daten, die die verfügbare Übertragungsleistung der Funkeinheit betreffen, übertragen wurden, während die Daten, die den empfohlenen Übertragungsmodus für die Funkeinheit (110) betreffen, im zweiten Rahmen (120, 130) empfangen werden, nachdem die Daten, die den gegenwärtigen Übertragungsmodus der Funkeinheit betreffen, übertragen wurden;
worin der Prozessor (331) dazu konfiguriert ist, den Übertragungsmodus der Funkeinheit (110, 300) zu modifizieren, mindestens zum Teil auf den von der anderen Funkeinheit (105) empfangenen Daten basierend, die den empfohlenen Übertragungsmodus betreffen, um dadurch eine Verbindung zwischen den Funkeinheiten (105, 110) anzupassen.

21. Funkeinheit (110, 300) nach Anspruch 20, worin die Funkeinheit (110, 300) eine entferntes Endgerät umfasst und die andere Funkeinheit eine Basisstation umfasst.

22. Funkeinheit (110, 300) nach Anspruch 20, worin jeder Übertragungsmodus ein Codierverfahren und ein Modulationsverfahren umfasst.

23. Trägermedium, das einen computerlesbaren Code zum Steuern eines Computers trägt, um das Verfahren nach einem der Ansprüche 1 bis 8 oder einem der Ansprüche 12 bis 19 auszuführen.

## Revendications

1. Procédé de messagerie (100) pour l'adaptation de liaison de transmission, le procédé comportant :
dans une première trame (115, 125), la réception (135, 155) de données, par une première unité radio (105), en provenance d'une seconde unité radio (110), connexes à la puissance de transmission disponible de la seconde unité radio (110), et ensuite la transmission (140, 160) des données, par la première unité radio (105) à la seconde unité radio (110), connexes à un mode de transmission en cours de la première unité radio (105) ;
dans une seconde trame (120, 130), la réception (145, 165) de données, par la première unité radio (105), en provenance de la seconde unité radio (110), connexes à un mode de transmission en cours de la seconde unité radio (110), et ensuite la transmission (150, 170) de données, par la première unité radio (105), à la seconde unité radio (110), connexes à un mode de transmission recommandé pour la seconde unité radio (110) ; et
l'adaptation d'une liaison, par la première unité radio (105), entre les première et seconde unités radios (105, 110), par le biais des données connexes au mode de transmission recommandé transmises à la seconde unité radio (110), dans lequel le mode de transmission recommandé est déterminé par la première unité radio (105) sur la base, au moins en partie, de la puissance de transmission disponible de la seconde unité radio (100) ;
dans lequel les première et seconde trames (115, 120 ; 125, 130) sont des trames alternées d'un flux en vue d'adapter la liaison.

2. Procédé selon la revendication 1, dans lequel les données connexes à la puissance de transmission disponible de la seconde unité radio (110) sont reçues dans une tranche de temps de liaison montante de la première trame (115, 125), et les données connexes au mode de transmission en cours de la première unité radio (105) sont transmises dans une tranche de temps de liaison descendante de la première trame (115, 125).

3. Procédé selon la revendication 2, dans lequel les données connexes au mode de transmission en cours de la seconde unité radio (110) sont reçues dans une tranche de temps de liaison montante de la seconde trame (120, 130) et les données connexes au mode de transmission recommandé pour la seconde unité radio (110) sont transmises dans une tranche de temps de liaison descendante de la seconde trame (120, 130).

4. Procédé selon la revendication 1, dans lequel les données connexes à la puissance de transmission disponible de la seconde unité radio (110) sont reçues dans une tranche de temps de liaison descendante de la première trame (115, 125) et les données connexes au mode de transmission en cours de la première unité radio (105) sont transmises dans une tranche de temps de liaison montante de la première trame (115, 125).

5. Procédé selon la revendication 4, dans lequel les données connexes au mode de transmission en cours de la seconde unité radio (110) sont reçues dans une tranche de temps de liaison descendante de la seconde trame (120, 130) et les données connexes au mode de transmission recommandé pour la seconde unité radio (110) sont transmises dans une tranche de temps de liaison montante de la seconde trame (120, 130).

6. Procédé selon la revendication 1, dans lequel chaque mode de transmission comporte un procédé de codage et un procédé de modulation.

7. Procédé selon la revendication 1, dans lequel les données sont transmises et reçues dans un canal de signalisation associé rapide (FACCH).

8. Procédé selon la revendication 1, dans lequel la première unité radio (105) est une station de base et dans lequel la seconde unité radio (110) est un terminal distant.

9. Unité radio (105, 300) comportant :
un processeur (331) destiné à déterminer un mode de transmission pour l'unité radio (105, 300) et à déterminer un mode de transmission recommandé pour une autre unité radio (110) ;
un émetteur (339) destiné à transmettre des données à l'autre unité radio (110), connexes à un mode de transmission en cours de l'unité radio (105, 300), et à transmettre des données à l'autre unité radio (110), connexes à un mode de transmission recommandé pour l'autre unité radio (110), dans laquelle les données connexes au mode de transmission en cours de l'unité radio (105, 300) sont transmises dans une première trame (115, 125), alors que les données connexes au mode de transmission recommandé pour l'autre unité radio (110) sont transmises dans une seconde trame (120, 130), dans laquelle les première et seconde trames (115, 120 ; 125, 130) sont des trames alternées d'un flux en vue d'adapter une liaison entre les unités radios (105, 110) ; et
un récepteur (305) destiné à recevoir des données en provenance de l'autre unité radio (110), connexes à la puissance de transmission disponible de l'autre unité radio (110), et à recevoir des données en provenance de l'autre unité radio (110), connexes à un mode de transmission en cours de l'autre unité radio (110), dans laquelle les données connexes à la puissance de transmission disponible de l'autre unité radio (110) sont reçues dans la première trame (115, 125), préalablement à la transmission des données connexes au mode de transmission en cours de l'unité radio, alors que les données connexes au mode de transmission en cours de l'autre unité radio (110) sont reçues dans la seconde trame (125, 130), préalablement à la transmission des données connexes au mode de transmission recommandé pour l'autre unité radio ; et
dans laquelle le processeur (331) est configuré de manière à adapter la liaison entre les unités radios (105, 110), par le biais des données connexes au mode de transmission recommandé transmises à l'autre unité radio (110), dans laquelle le mode de transmission recommandé est déterminé sur la base, au moins en partie, de la puissance de transmission disponible de l'autre unité radio (100).

10. Unité radio (105, 300) selon la revendication 9, dans laquelle l'unité radio (105, 300) comporte une station de base et l'autre unité radio (110) comporte un terminal distant.

11. Unité radio (105, 300) selon la revendication 9, dans laquelle chaque mode de transmission comporte un procédé de codage et un procédé de modulation.

12. Procédé de messagerie (100) pour l'adaptation de liaison de transmission, le procédé comportant :
dans une première trame (115, 125), la transmission (135, 155) de données, à une première unité radio (105), par une seconde unité radio (110), connexes à la puissance de transmission disponible (135) de la seconde unité radio (110), et ensuite la réception (140, 160) de données, en provenance de la première unité radio (105), par la seconde unité radio (110), connexes à un mode de transmission en cours de la première unité radio (105) ;
dans une seconde trame, la transmission (145, 165) de données, à la première unité radio (105), par la seconde unité radio (110), connexes à un mode de transmission en cours de la seconde unité radio (110), et ensuite la réception (150, 170) de données, en provenance de la première unité radio (105), par la seconde unité radio (110), connexes à un mode de transmission recommandé pour la seconde unité radio (110) ; et
la modification du mode de transmission de la seconde unité radio (110) sur la base, au moins en partie, des données connexes au mode de transmission recommandé, reçues à partir de la première unité radio (105), en vue d'adapter par conséquent une liaison entre les première et seconde unités radios (105, 110), dans lequel les première et seconde trames (115, 120 ; 125, 130) sont des trames alternées d'un flux en vue d'adapter la liaison.

13. Procédé selon la revendication 12, dans lequel les données connexes à la puissance de transmission disponible de la seconde unité radio (110) sont transmises dans une tranche de temps de liaison montante de la première trame (115, 125), et les données connexes au mode de transmission en cours de la première unité radio (105) sont reçues dans une tranche de temps de liaison descendante de la première trame (115, 125).

14. Procédé selon la revendication 13, dans lequel les données connexes au mode de transmission en cours de la seconde unité radio (110) sont transmises dans une tranche de temps de liaison montante de la seconde trame (120, 130), et les données connexes au mode de transmission recommandé pour la seconde unité radio (110) sont reçues dans une tranche de temps de liaison descendante de la seconde trame (120, 130).

15. Procédé selon la revendication 12, dans lequel les données connexes à la puissance de transmission disponible de la seconde unité radio (110) sont transmises dans une tranche de temps de liaison montante de la première trame (115, 125), et les données connexes au mode de transmission en cours de la première unité radio (105) sont reçues dans une tranche de temps de liaison montante de la première trame (115, 125).

16. Procédé selon la revendication 15, dans lequel les données connexes au mode de transmission en cours de la seconde unité radio (110) sont transmises dans une tranche de temps de liaison descendante de la seconde trame (120, 130), et les données connexes au mode de transmission recommandé pour la seconde unité radio (110) sont reçues dans une tranche de temps de liaison montante de la seconde trame (120, 130).

17. Procédé selon la revendication 12, dans lequel chaque mode de transmission comporte un procédé de codage et un procédé de modulation.

18. Procédé selon la revendication 12, dans lequel les données sont transmises et reçues dans un canal de signalisation associé rapide (FACCH).

19. Procédé selon la revendication 12, dans lequel la première unité radio (105) est une station de base et dans lequel la seconde unité radio (110) est un terminal distant.

20. Unité radio (110, 300) comportant :
un processeur (331) destiné à déterminer un mode de transmission pour l'unité radio (110) ;
un émetteur (339) destiné à transmettre des données, à une autre unité radio (105), connexes à la puissance de transmission disponible de l'unité radio (110), et à transmettre des données à l'autre unité radio (105), connexes à un mode de transmission en cours de l'unité radio (110), dans laquelle les données connexes à la puissance de transmission disponible de l'unité radio (110) sont transmises dans une première trame (115, 125), alors que les données connexes au mode de transmission en cours de l'unité radio (110) sont transmises dans une seconde trame (120, 130), dans laquelle les première et seconde trames (115, 120 ; 125, 130) sont des trames alternées d'un flux en vue d'adapter une liaison entre les unités radios (105, 110) ;
un récepteur (305) destiné à recevoir des données, en provenance de l'autre unité radio (105), connexes à un mode de transmission en cours de l'autre unité radio (105), et à recevoir des données, en provenance de l'autre unité radio (105), connexes à un mode de transmission recommandé pour l'unité radio (110), dans laquelle les données connexes au mode de transmission en cours de l'autre unité radio (105) sont reçues dans la première trame (115, 125), postérieurement à la transmission des données connexes à la puissance de transmission disponible de l'unité radio, alors que les données connexes au mode de transmission recommandé pour l'unité radio (110) sont reçues dans la seconde trame (120, 130), postérieurement à la transmission des données connexes au mode de transmission en cours de l'unité radio ;
dans laquelle le processeur (331) est configuré de manière à modifier le mode de transmission de l'unité radio (110, 300) sur la base, au moins en partie, des données connexes au mode de transmission recommandé, reçues à partir de l'autre unité radio (105), en vue d'adapter par conséquent une liaison entre les unités radios (105, 110).

21. Unité radio (110, 300) selon la revendication 20, dans laquelle l'unité radio (110, 300) comporte un terminal distant et l'autre unité radio comporte une station de base.

22. Unité radio (110, 300) selon la revendication 20, dans laquelle chaque mode de transmission comporte un procédé de codage et un procédé de modulation.

23. Support de transport portant du code lisible par ordinateur en vue d'amener un ordinateur à mettre en oeuvre un procédé selon l'une quelconque des revendications 1 à 8 ou selon l'une quelconque des revendications 12 à 19.
